# EUROPEAN PATENT APPLICATION

(11) **EP 2 940 590 A1**
(43) Date of publication of application: **04.11.2015**
(21) Application number: 13869495.5
(22) Date of filing: 26.12.2013
(51) Int. Cl.: G06F 13/00, H04B 5/02, H04M 1/00

(54) **COMMUNICATION DEVICE**

(30) Priority: 27.12.2012 JP 2012284199
(71) Applicant: Panasonic Intellectual Property Management Co., Ltd., Osaka-shi, Osaka 540-6207 (JP)
(72) Inventor: OKAZAKI, Yoshinori, Osaka 540-6207 (JP)
(74) Representative: Eisenführ Speiser
(86) International application number: PCT/JP2013/007612
(87) International publication number: WO 2014/103313

(57) **Abstract**

A communication apparatus includes a communicating unit, and a controller configured to control communication through the communicating unit. When another communication device comes within a predetermined distance from the communicating unit (S510), the controller receives device identification information for identifying the other device from the other device through the communicating unit (S545), stores correlation information correlating the received device identification information with image identification information identifying image data to be transferred into a predetermined storage device (S555). The controller transfers the image data to be transferred to the other communication device based on the stored correlation information (S575).

## Description

### TECHNICAL FIELD

The present disclosure relates to a communication apparatus capable of communicating with another device.

### BACKGROUND ART

Patent Document 1 discloses a technique of transferring an image between electronic devices, or specifically, between an electronic still camera and a wristwatch. More specifically, Patent Document 1 discloses a technique of transferring an image from an electronic still camera to a wristwatch of an unspecified person located at a close distance from the electronic still camera and within a radio wave reachable range. It is described that this arrangement can be used for a meeting game in a crowd.

### PRIOR ART DOCUMENT

### PATENT DOCUMENT

Patent Document 1: Japanese Laid-Open Patent Publication No. 2001-103409

### SUMMARY OF THE INVENTION

### PROBLEM TO BE SOLVED BY THE INVENTION

The technique disclosed in Patent Document 1 has a security problem since an image is transferred to an unspecified person wearing a wristwatch if the distance between an electronic still camera and the wristwatch is close and the wristwatch is located within a radio wave reachable range from the electronic still camera.

It is an object of the present disclosure to provide a communication apparatus enabling easy communication between devices while ensuring security.

### MEANS FOR SOLVING PROBLEM

A first communication apparatus of the present disclosure includes a communicating unit, and a controller configured to control communication through the communicating unit. When another communication device comes within a predetermined distance from the communicating unit, the controller receives device identification information for identifying the other device from the other device through the communicating unit. The controller stores correlation information correlating the received device identification information with image identification information identifying image data to be transferred into a predetermined storage device. The controller
transfers the image data to be transferred to the other communication device based on the stored correlation information.

A second communication apparatus of the present disclosure includes a first communicating unit, a second communicating unit having a communicable distance shorter than the first communicating unit, and a controller configured to control communication through the first communicating unit and the second communicating unit. When another communication device comes within the communicable distance to the second communicating unit, the controller receives device identification information identifying the other communication device from the other communication device through the second communicating unit. The controller stores correlation information correlating the received device identification information with image identification information identifying image data to be transferred into a predetermined storage device. The controller transmits the image data to be transferred through the first communicating unit to the other communication device based on the stored correlation information.

A method of the present disclosure is a method of transferring image data from a first device to a second device. In this method, when a distance between the first device and the second device becomes within a predetermined communication distance, device identification information identifying the second device is transmitted from the second device to the first device. Correlation information correlating the device identification information received from the second device with image identification information identifying image data to be transferred is stored by the first device. The image data to be transferred is transmitted by the first device to the second device base on the stored correlation information.

### EFFECT OF THE INVENTION

The present disclosure can provide the communication apparatus enabling easy communication between devices while ensuring security.

### BRIEF DESCRIPTION OF DRAWINGS

Fig. 1 is a diagram of a configuration of an image sharing system including a digital camera and a smartphone according to first to third embodiments;
Fig. 2 is a diagram of an electric configuration of the digital camera;
Fig. 3 is a diagram of an electric configuration of the smartphone;
Fig. 4 is a diagram of a sequence related to a WiFi communication establishing operation between the digital camera and the smartphone;
Fig. 5 is a flowchart of an image sharing (image transfer) operation according to the first embodiment;
Figs. 6A-6C are explanatory diagrams of a management table (correlation information) managed by the digital camera according to the first embodiment;
Fig. 7 is a flowchart of an image sharing (image transfer) operation according to the second embodiment;
Figs. 8A-8C are explanatory diagrams of a management table (correlation information) managed by the digital camera according to the second embodiment;
Fig. 9 is a flowchart of an image sharing (image transfer) operation according to the third embodiment;
Figs. 10A-10C are explanatory diagrams of a management table (correlation information) managed by the digital camera according to the third embodiment;
Fig. 11 is a diagram of a configuration of an image sharing system according to a fourth embodiment;
Fig. 12 is a diagram of an electric configuration of a cloud server;
Fig. 13 is a flowchart of an image sharing operation according to the fourth embodiment; and
Figs. 14A-14E are diagrams for explaining an image sharing operation through touch operations between electronic devices.

### MODES FOR CARRYING OUT THE INVENTION

Embodiments will now be described in detail with reference to the drawings as needed. It is noted that detailed description will not be provided more than necessary in some cases. For example, detailed description of already well-known facts and repeated description of substantially the same constituent elements may not be provided. This is for the purpose of avoiding unnecessary redundancy of the following description and facilitating understanding by those skilled in the art. The inventor(s) provides the accompanying drawings and the following description for sufficient understanding of the present disclosure by those skilled in the art and it is not intended to limit the subject matter described in the claims thereto.

### First Embodiment

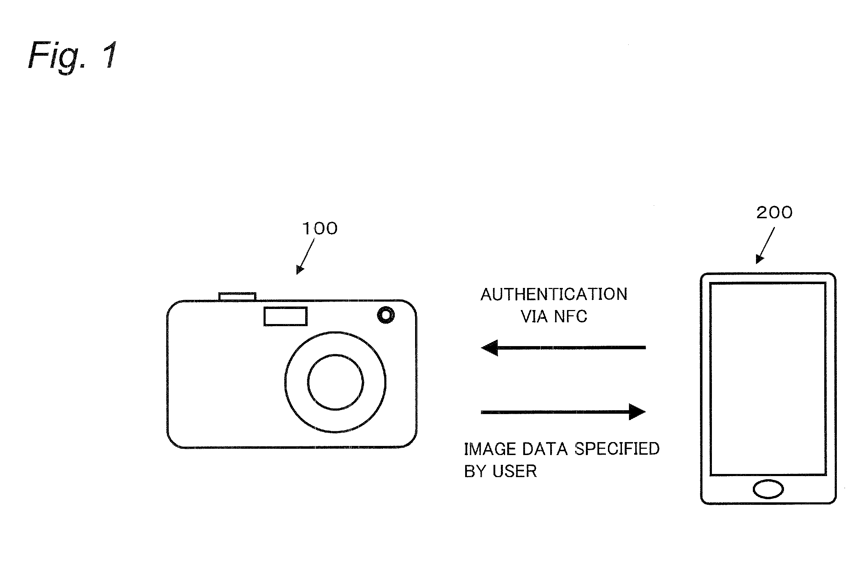

Fig. 1 is a diagram of a system configuration including a digital camera 100 and a smartphone 200 according to the first embodiment. The digital camera 100 can share image data with the smartphone 200 after an authentication operation via NFC (near field communication). The digital camera 100 manages image identification information identifying image data to be transferred and device identification information identifying the smartphone 200 that is a transfer destination device, correlating them with each other so that only an authenticated device is granted the authority to acquire image data specified by a user. This enables easy image transfer between devices while ensuring security.

Configurations of the digital camera 100 and the smartphone 200 will hereinafter be described together with an image sharing (image transfer) operation between these devices.

### 1-1. Configurations

The configurations of the digital camera 100 and the smartphone 200 according to the first embodiment will be described with reference to the figures.

### 1-1-1. Configuration of Digital Camera 100

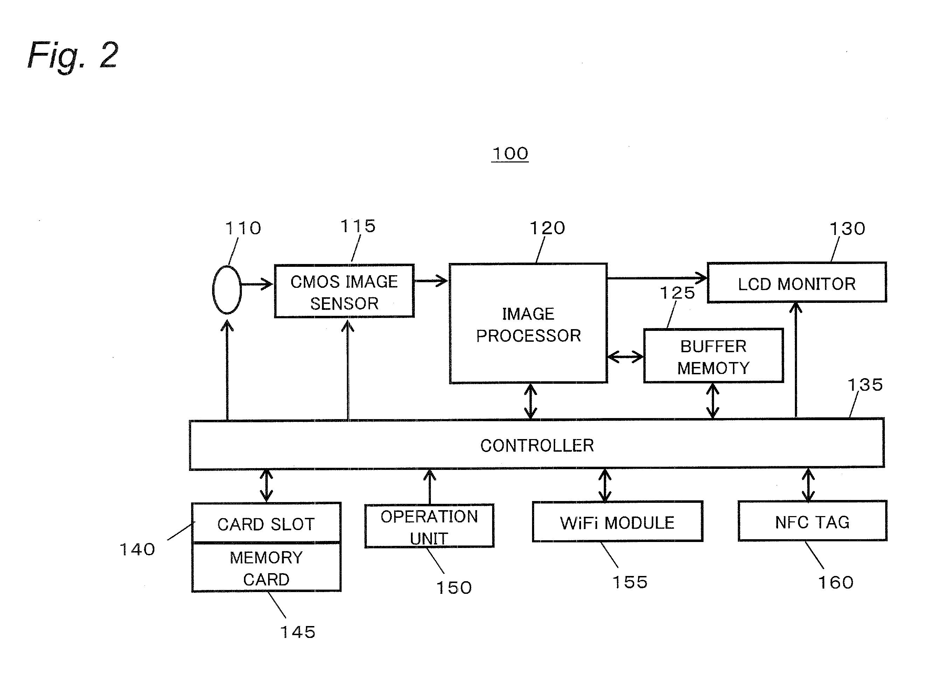

Fig. 2 is an electric configuration diagram of the digital camera 100. The digital camera 100 uses a CMOS image sensor 115 to capture a subject image formed through an optical system 110. The CMOS image sensor 115 generates imaging data (RAW data) based on the captured subject image. An image processor 120 applies various processes to the imaging data generated by capturing the image, thereby generating image data. A controller 135 records the image data generated by the image processor 120 into a memory card 140 inserted in to a card slot 140. The controller 135 can accept an operation on an operation unit 150 by a user to display (reproduce) the image data recorded in the memory card 140 on a liquid crystal monitor 130.

The optical system 110 includes a focus lens, a zoom lens, an optical image stabilization lens (OIS), a diaphragm, a shutter, etc. The various lenses included in the optical system 110 may be made up of any number of lenses or any number of groups.

The CMOS image sensor 115 captures a subject image formed through the optical system 110 to generate the imaging data. The CMOS image sensor 115 generates an image data for a new frame at a predetermined frame rate (e.g., 30 frames/second). The timing of generation of the imaging data and an electronic shutter operation are controlled by the controller 135. An imaging element is not limited to a CMOS image sensor, and other image sensors such as a CCD image sensor and an NMOS image sensor may be used.

The image processor 120 applies various processes to the imaging data output from the CMOS image sensor 115, thereby generating image data. The image processor 120 applies various processes to the image data read from the memory card 145, thereby generating an image to be displayed on the liquid crystal monitor 130. The various processes include, but not limited to, white balance correction, gamma correction, a YC conversion process, an electronic zoom process, a compression process, a decompression process, and the like. The image processor 120 may be made up of a hard-wired electronic circuit or may be made up of a microcomputer etc. using a program.

The liquid crystal monitor 130 is disposed on a back surface of the digital camera 100. The liquid crystal monitor 130 displays an image based on the image data processed by the image processor 120. A display apparatus is not limited to a liquid crystal monitor, and other monitors such as an organic EL monitor may be used.

The controller 135 generally controls the overall operation of the digital camera 100. The controller 135 may be made up of a hard-wired electronic circuit or may be made up of a microcomputer etc. The controller 135 and the image processor 120 or the like may be integrated into a single semiconductor chip. Although not shown, the controller 135 has a ROM therein. The ROM stores an SSID (Service Set Identifier) and a WEP key (Wired Equivalent Privacy key) necessary for establishing WiFi communication with another communication device. The controller 135 can read the SSID and the WEP key from the ROM as needed. The ROM also stores programs related to autofocus control (AF control) and communication control as well as a program for generally controlling the overall operation of the digital camera 100.

A buffer memory 125 is a storage medium acting as a work memory for the image processor 120 and the controller 135. The buffer memory 125 is achieved by a DRAM (Dynamic Random Access Memory).

The card slot 140 is a connecting means which the memory card 145 can be attached to and detached from. The card slot 140 can electrically and mechanically connected to the memory card 145. The memory card 145 is an external memory including a memory device such as a flash memory therein. The memory card 145 can store data such as image data generated by the image processor 120.

The operation unit 150 is a collective name for hard keys such as operation buttons and operation levers disposed on the exterior of the digital camera 100 and receives an operation by a user. When receiving an operation by a user, the operation unit 150 notifies the controller 135 of various operation instruction signals.

A WiFi module 155 is a communication module performing communication conforming to the communication standard IEEE 802.11. The digital camera 100 can communicate through the WiFi module 155 with another communication device equipped with a WiFi module. The digital camera 100 may communicate through the WiFi module 155 with another communication device directly or via an access point. The WiFi module may be replaced with a communication module performing communication conforming to the communication standard 802.15.1, i.e., Bluetooth (registered trademark). In particular, the communication module may be a communication module which is capable of communication at a relatively high communication bit rate and has a communication area of several meters or more.

An NFC tag 160 is a communication tag performing communication conforming to an NFC standard. The digital camera 100 communicates through the NFC tag 160 with another communication device equipped with an NFC reader/writer to read and write data from/to the NFC reader/writer. The NFC tag 160 includes an antenna, a memory, and a logic circuit. The antenna of the NFC tag 160 transmits and receives signals conforming to the NFC standard. The memory of the NFC tag 160 stores information to be read by the NFC reader/writer. Information is written to the memory of the NFC tag 160, by the NFC reader/writer. The logic circuit of the NFC tag 160 demodulates and transmits a signal received by the antenna to the controller 135 and modulates a signal transmitted from the controller 135 or the memory of the NFC tag 160. Even while no electric power is supplied from the inside of the digital camera 100, the NFC tag 160 can operate with electric power supplied through electromagnetic induction from an NFC reader/writer adjacent to the NFC tag 160.

The communication area of communication conforming to the NFC standard is about several centimeters. For communication through the NFC tag 160, a user of the digital camera 100 must bring the digital camera 100 close to another communication device equipped with an NFC reader/writer such that the other communication device comes within a distance of several centimeters from the digital camera 100. Since the action of bringing the digital camera 100 close to the other communication device must be performed, the communication can be performed with any device of the other party that the user wants to communicate with at any timing when the user wants to communicate. The NFC tag 160 may be replaced with a communicating means performing another near field type wireless communication.

### 1-1-2. Configuration of Smartphone 200

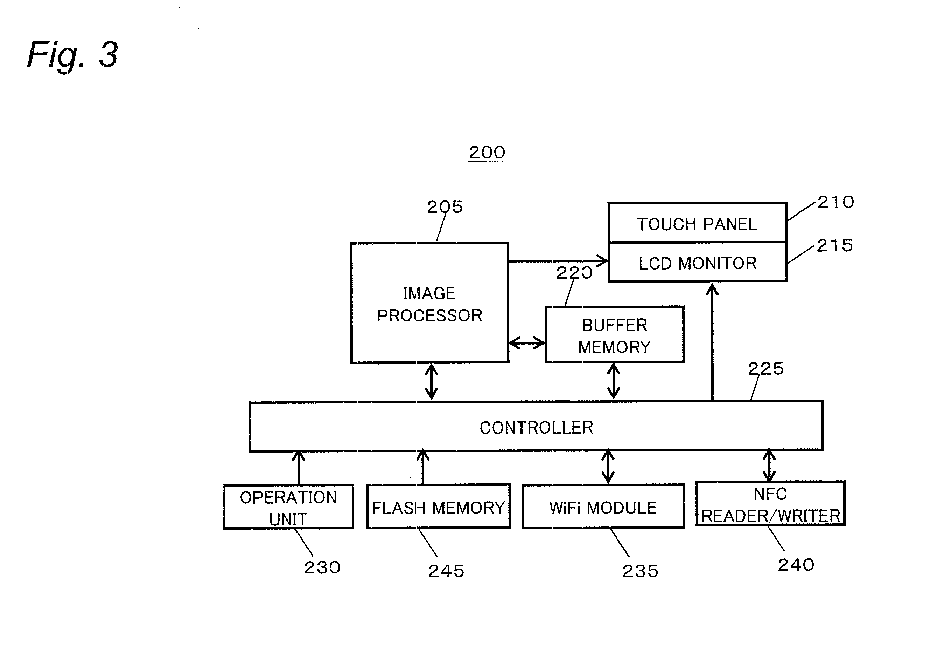

Fig. 3 is an electric configuration diagram of the smartphone 200. The smartphone 200 can display on a liquid crystal monitor 215 an image represented by image data generated by an image processor 205. A touch panel 210 is disposed on a surface of the liquid crystal monitor 215 so that a touch operation by a user can be received. The smartphone 200 has an operation unit 230 which allows an operation other than the operation through the touch panel 210. A controller 225 can communicate through a WiFi module 235 and an NFC reader/writer 240 with another communication device.

The image processor 205 applies various processes to image data read from the memory card 145, thereby generating an image to be displayed on the liquid crystal monitor 215. The various processes include, but not limited to, a decompression process, and the like. The image processor 205 may be made up of a hard-wired electronic circuit or may be made up of a microcomputer, or the like using a program.

The touch panel 210 is an input device detecting contact of a user's finger, or the like to output operation information to the controller 225. The touch panel 210 is disposed on the surface of the liquid crystal monitor 215. The touch panel 210 may be configured by a resistance film system, a capacitance system, or any other system.

The liquid crystal monitor 215 is a display device displaying a screen instructed by the controller 225.

A buffer memory 220 is a memory temporarily storing information necessary for the controller 225 performing various processing operations.

The controller 225 controls operations of the units composing the smartphone 200. The controller 225 is electrically connected to the image processor 205, the touch panel 210, the liquid crystal monitor 215, the buffer memory 220, the operation unit 230, the WiFi module 235, and the NFC reader/writer 240.

The WiFi module 235 is a communication module performing communication conforming to the communication standard IEEE 802.11. The smartphone 200 can communicate through the WiFi module 235 with another communication device equipped with a WiFi module. The smartphone 200 may communicate through the WiFi module 235 with another communication device directly or via an access point. The WiFi module may be replaced with a communication module performing communication conforming to the communication standard 802.15.1, i.e., Bluetooth (registered trademark). In particular, the communication module may be a communication module which is capable of communication at a relatively high communication bit rate and has a communication area of several meters or more.

The NFC reader/writer 240 is a communication reader performing communication conforming to an NFC standard. The smartphone 200 can communicate through the NFC reader/writer 240 with another communication device equipped with an NFC reader/writer or another communication device equipped with an NFC tag to read and write data of the NFC tag. The NFC reader/writer 240 includes an antenna, a memory, and a logic circuit. The antenna of the NFC reader/writer 240 transmits and receives signals conforming to the NFC standard. The memory of the NFC reader/writer 240 stores information to be written to the NFC tag. The memory of the NFC reader/writer 240 stores information read from the NFC tag. The logic circuit of the NFC reader/writer 240 demodulates and transmits a signal received by the antenna to the controller 225 and modulates a signal transmitted from the controller 225 or the memory of the NFC reader/writer 240. Even while an adjacent NFC tag is not supplied with electric power, the NFC reader/writer 240 can supply electric power to the adjacent NFC tag by electromagnetic induction to write or read information. The NFC reader/writer may be replaced with a communicating means performing another near field type wireless communication.

A flash memory 245 stores image data captured by the smartphone 200, image data transferred from the digital camera 100, etc.

The smartphone 200 may have a telephone function, an internet communication function, and a camera function.

### 1-2. Operation

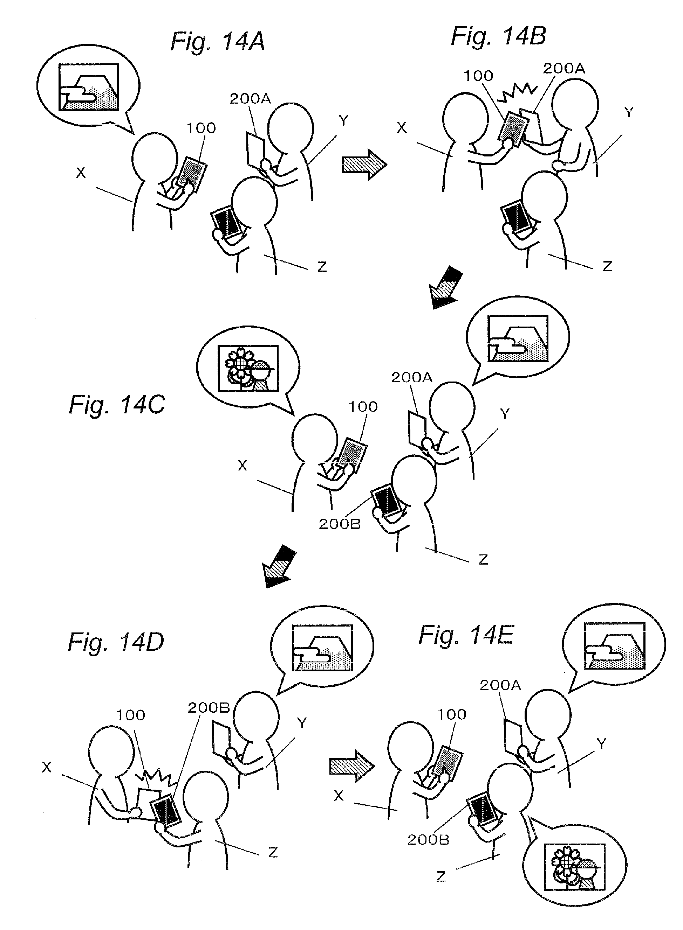

A communication operation between the digital camera 100 and the smartphone 200 according to the first embodiment will be described. In the following description, a "touch operation" refers to an operation of a user bringing the NFC tag 160 of the digital camera 100 and the NFC reader/writer 240 of the smartphone 200 close to each other within a communication distance range of the communication conforming to the NFC standard. The touch operation may be performed by bringing the smartphone 200 (i.e., the NFC reader/writer 240 of the smartphone 200) close to the digital camera 100 (i.e., the NFC tag 160 of the digital camera 100) or by bringing the digital camera 100 (i.e., the NFC tag 160 of the digital camera 100) close to the smartphone 200 (i.e., the NFC reader/writer 240 of the smartphone 200). In the following description, it is assumed that one or a plurality of the smartphones 200 acquires (is allowed to share) image data recorded in the memory card 145 attached to the digital camera 100. The user performs a touch operation as an operation for causing the smartphone 200 to acquire an image from the digital camera 100. Therefore, the user performs, as the touch operation, an operation of bringing the NFC reader/writer 240 of the smartphone 200 close to the NFC tag 160 of the digital camera 100. This image acquisition (transfer) operation will be described with reference to Figs. 14A-14E.

Figs. 14A-14E are diagrams explaining a user operation for sharing image data stored in the digital camera 100 with a smartphone 200A and a smartphone 200B. It is assumed that the digital camera 100 is owned by a user X and that the smartphone 200A is owned by a user Y while the smartphone 200B is owned by a user Z.

First, as shown in Fig. 14A, the user X operates the digital camera 100 to select an image to be shared with the user Y. Subsequently, as shown in Fig. 14B, the user X causes the digital camera 100 to touch the smartphone 200A of the user Y. This enables the smartphone 200A of the user Y to acquire the image selected by the user X in the situation shown in Fig. 14A (see Fig. 14C).

As shown in Fig. 14C, the user X then operates the digital camera 100 to select an image to be shared with the user Z. As is the case with the image transfer to the user Y, the user X causes the digital camera 100 to touch the smartphone 200B of the user Z as shown in Fig. 14D. As shown in Fig. 14E, this enables the smartphone 200B of the user Z to acquire the image selected by the user X in the situation shown in Fig. 14C.

As described above, the images allowed to be shared with the user Y and the user Z can be selected by the user X. In this case, the touch operation triggers the transfer of the selected image to the device of the other party sharing the image. As a result, the communication for sharing the image can easily be performed in consideration of security.

Detailed operations of each of devices for implementing the image transfer function through the touch operation as described above will hereinafter be described.

### 1-2-1. WiFi Communication Establishing Operation

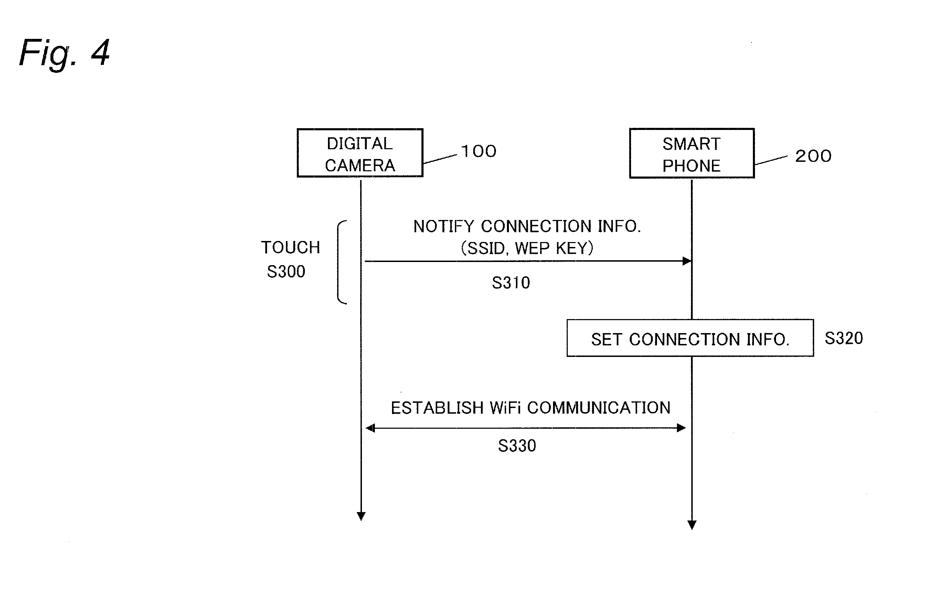

An operation related to establishment of WiFi communication between the digital camera 100 and the smartphone 200 will first be described with reference to Fig. 4. Fig. 4 is a sequence diagram of a connection operation of the digital camera 100 and the smartphone 200.

When the smartphone 200 is touched on the digital camera 100 (S300), the controller 225 of the smartphone 200 reads connection information (SSID, WEP key) necessary for connecting to the digital camera 100, through the NFC tag 160 and the NFC reader/writer 240 from the controller 135 of the digital camera 100 (S310). After reading the connection information, the controller 225 of the smartphone 200 sets the read connection information in the smartphone 200 (S320). This enables the controller 225 of the smartphone 200 to identify the WiFi module 155 of the digital camera 100 with which the smartphone 200 should be communicate and to decode encryption code for communicating with the identified WiFi module 155 of the digital camera 100. As a result, the WiFi module 235 of the smartphone 200 and the WiFi module 155 of the digital camera 100 can establish WiFi communication with each other (S330).

### 1-2-2. Image Sharing Operation

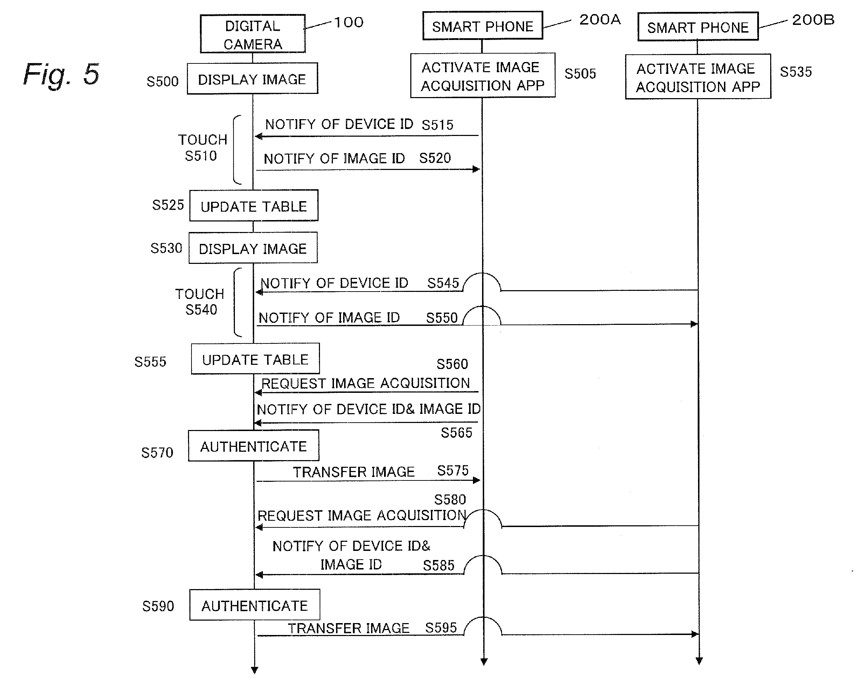

An image sharing operation performed between a digital camera and a plurality of (two) smartphones according to the first embodiment will be described. Fig. 5 is a flowchart of the image sharing operation between the digital camera 100 and the two smartphones 200A, 200B. Description will be made of the case that the image date recorded in the memory card 145 of the digital camera 100 is shared among the digital camera 100 and the two smartphones, i. e. , the smartphone 200A and the smartphone 200B, with reference to Fig. 5. The smartphone 200A and the smartphone 200B have the same configuration as the smartphone 200 described above. It is assumed that the establishment of WiFi communication described with reference to Fig. 4 is completed before the operation shown in Fig. 5.

The user of the digital camera 100 operates the operation unit 150 to select an image allowed to be shared with the user of the smartphone 200A (an image to be transferred) out of the image data recorded in the memory card 145. Specifically, the user operates the operation unit 150 to display a desired image on the liquid crystal monitor 130 of the digital camera 100. Therefore, the controller 135 of the digital camera 100 displays the image on the liquid crystal monitor 130 in accordance with the operation of the operation unit 150 by the user (S500). As a result, the image to be shared between the digital camera 100 and the smartphone 200A (the image to be transferred) is selected. In particular, the image displayed on the liquid crystal monitor 130 is the image to be shared with the user of the smartphone 200A (the image to be transferred).

On the other hand, the user of the smartphone 200A operates the touch panel 210 to activate an image acquisition application for sharing an image with the digital camera 100. Therefore, the controller 225 of the smartphone 200A activates the image acquisition application in accordance with the operation of the touch panel 210 by the user (S505). As a result, the smartphone 200A shifts to a mode capable of notifying the closely located digital camera 100 of an acquisition request for an image.

The user of the smartphone 200A subsequently performs the touch operation to touch the digital camera 100 with the smartphone 200A while the image is displayed on the liquid crystal monitor 130 of the digital camera 100 (S510). This touch operation causes the controller 225 of the smartphone 200A to notify the controller 135 of the digital camera 100, through NFC communication, of a device identifier for identifying the smartphone 200A (S515). The device identifier is information specific to a device for uniquely identifying the device and is, for example, a serial number or a MAC address of the device.

The controller 135 of the digital camera 100 notifies the controller 225 of the smartphone 200A through NFC communication of an image identifier for identifying the image displayed on the liquid crystal monitor 130 of the digital camera 100 (S520). Although the notification of the image identifier (S520) is performed after the notification of the device identifier (S515) through the touch operation of step S510 in the example described above, the notification of the device identifier may be performed after the notification of the image identifier.

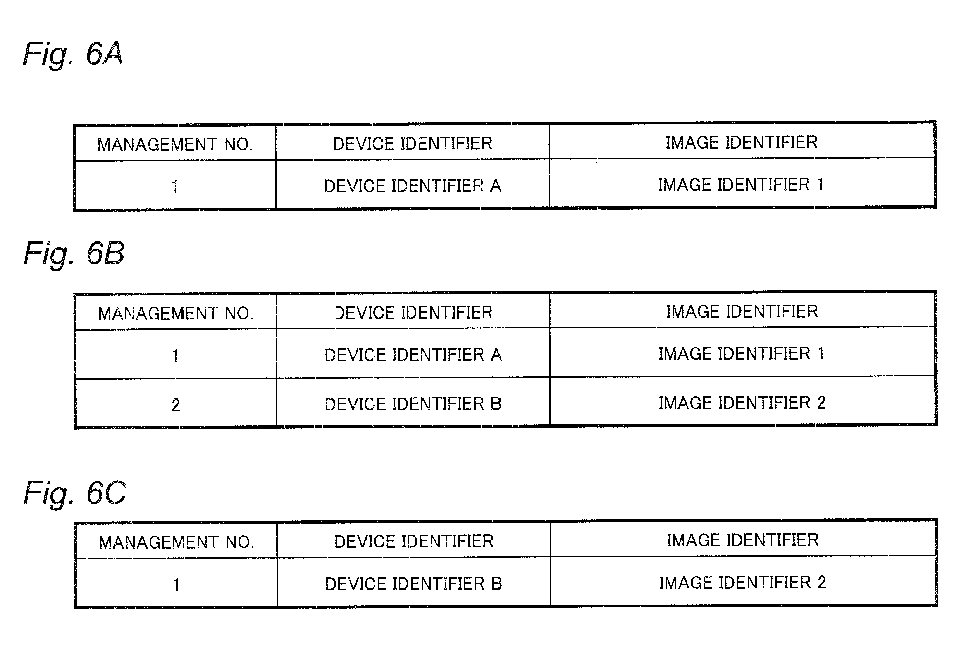

The controller 135 of the digital camera 100 manages the device identifier acquired from the smartphone 200 and the image identifier indicative of the selected image, correlating them with each other. Figs. 6A-6C are explanatory diagrams of a management table (correlation information) correlating the device identifier with the image identifier managed by the digital camera 100. As shown in Fig. 6A, the controller 135 of the digital camera 100 manages the device identifier acquired from the smartphone 200A and the image identifier supplied to the smartphone 200A, correlating them with each other. It is assumed that the device identifier of the smartphone 200A is a "device identifier A" while the image identifier supplied to the smartphone 200A is an "image identifier 1." The digital camera 100 creates a management table correlating the "device identifier A" with the "image identifier 1", as shown in Fig. 6A and stores the table into the memory in the digital camera 100 (S525). The controller 135 of the digital camera 100 can comprehend which image should be transferred to which device by referring to this management table. In other words, the management table manages a request for image sharing that is received from the smartphone 200 and that should be executed by the digital camera 100.

The user of the digital camera 100 then operates the operation unit 150 to select an image allowed to be shared with the user of the smartphone 200B (an image to be transferred) out of the image data recorded in the memory card 145. Therefore, the controller 135 displays the image to be transferred on the liquid crystal monitor 130 in accordance with the operation of the operation unit 150 by the user (S530). As a result, the image to be shared between the digital camera 100 and the smartphone 200B (the image to be transferred) is selected. In particular, the image displayed on the liquid crystal monitor 130 is the image to be shared with the user of the smartphone 200B (the image to be transferred).

On the other hand, the user of the smartphone 200B operates the touch panel 210 to activate the image acquisition application for sharing an image with the digital camera 100. Therefore, the controller 225 of the smartphone 200B activates the image acquisition application in accordance with the operation of the touch panel 210 by the user (S535). As a result, the smartphone 200B shifts to a mode capable of notifying the closely located digital camera 100 of an acquisition request for an image.

The user of the smartphone 200B subsequently performs the touch operation to touch the digital camera 100 with the smartphone 200B while the image is displayed on the liquid crystal monitor 130 of the digital camera 100 (S540). This touch operation causes the controller 225 of the smartphone 200B to notify the controller 135 of the digital camera 100, through NFC communication, of the device identifier for identifying the smartphone 200B (S545).

The controller 135 of the digital camera 100 notifies the controller 225 of the smartphone 200B, through NFC communication, of the image identifier for identifying the image displayed on the liquid crystal monitor 130 of the digital camera 100 (S550) . Although the notification of the image identifier (S550) is performed after the notification of the device identifier (S545) by the touch operation of step S540 in the example described above, the notification of the device identifier may be performed after the notification of the image identifier.

The controller 135 of the digital camera 100 manages the device identifier acquired from the smartphone 200B and the image identifier supplied to the smartphone 200B, correlating them with each other, as shown in Fig. 6B. It is assumed that the device identifier of the smartphone 200B is a "device identifier B" while the image identifier supplied to the smartphone 200B is an "image identifier 2." The digital camera 100 creates a management table with the "device identifier B" and the "image identifier 2" correlated with each other as shown in Fig. 6B and stores the table into the memory in the digital camera 100 (S555). As a result, the management table manages the correlation between the "device identifier A" and the "image identifier 1" and the correlation between the "device identifier B" and the "image identifier 2". This table enables the controller 135 of the digital camera 100 to manage which image should be transferred to which device.

When acquiring the image identifier from the digital camera 100 at step S520, the controller 225 of the smartphone 200A transmits an acquisition request for the image corresponding to the acquired image identifier, through WiFi communication, to the digital camera 100 (S560). The controller 225 of the smartphone 200A then notifies the digital camera 100, through WiFi communication, of the "device identifier A" identifying the smartphone 200 and the "image identifier 1" supplied from the digital camera 100 through the touch operation of step S520 (S565).

The controller 135 of the digital camera 100 receives the image acquisition request (S560) from the smartphone 200A and determines whether a pair of the acquired "device identifier A" and the "image identifier 1" is present in the management table, thereby authenticating the image acquisition request (S570). As a result of the determination, if the pair of the device identifier and the image identifier related to the image acquisition request is present in the management table, the controller 135 of the digital camera 100 transfers the requested image indicated by the image identifier through WiFi communication to the smartphone 200A (S575). After transferring the image to the smartphone 200A, the controller 135 of the digital camera 100 deletes the pair of the "device identifier A" and the "image identifier 1" related to this image acquisition request from the management table as shown in Fig. 6(C). As a result, the digital camera 100 can transfer the image related to the acquisition request only once through one touch operation.

On the other hand, when acquiring the image identifier from the digital camera 100 at step S550, the controller 225 of the smartphone 200B transmits an acquisition request for the image corresponding to the acquired image identifier through WiFi communication to the digital camera 100 (S580). The controller 225 of the smartphone 200B then notifies the digital camera 100, through WiFi communication, of the "device identifier B" identifying the smartphone 200 and the "image identifier 2" supplied from the digital camera 100 through the touch operation of step S520 (S585).

The controller 135 of the digital camera 100 receives the image acquisition request (S580) from the smartphone 200B and determines whether a pair of the acquired "device identifier B" and the "image identifier 2" is present in the management table, thereby authenticating the image acquisition request (S590). As a result of the determination, if the pair of the device identifier and the image identifier related to the image acquisition request is present in the management table, the controller 135 of the digital camera 100 transfers the requested image indicated by the image identifier through WiFi communication to the smartphone 200B (S595). After transferring the image to the smartphone 200B, the controller 135 of the digital camera 100 deletes the pair of the "device identifier B" and the "image identifier 2" related to this image acquisition request from the management table. As a result, the digital camera 100 can transfer the image related to the acquisition request only once through one touch operation.

Although WiFi communication is established before the image acquisition application is activated by the operation of the touch panel 210 in the example described above, this is not a limitation. For example, the image acquisition application may be activated before WiFi communication is established. Alternatively, the specification may be set such that the activation information of the image acquisition application is supplied from the digital camera 100 to the smartphone 200 through the touch operation. In this case, the establishment of WiFi communication to the activation of the image acquisition application can be completed by one touch operation.

If the pair of the "device identifier" and the "image identifier" related to the touch operation is already managed in the management table at step S510 or S540, the image acquisition request may be disabled in the touch operation or the image may be transferred each time the touch operation is repeated. In the above example, after the image transfer of step S575 or S595 is completed, the digital camera 100 immediately deletes the pair of the "device identifier" and the "image identifier" related to the touch operation from the management table. However, the pair of the "device identifier" and the "image identifier" may be deleted after a certain time has elapsed after the image transfer of step S575 or S595 is completed. In this case, for example, if the smartphone 200A or the smartphone 200B has a defect and fails to acquire the requested image, the smartphone 200A or the smartphone 200B can notify the digital camera 100 of the request for image acquisition again to obtain an opportunity to acquire the image again.

As described above, by correlating an image identifier identifying image data that is an object to be transferred with a device identifier identifying the smartphone 200 that is a destination device, the digital camera 100 can grant authority to acquire user-specified image data only to the authenticated destination device. As a result, even if images are shared with a plurality of the smartphones 200, the digital camera 100 can transfer an intended image through the touch operation only to the smartphone 200 intended to share the image.

Although the digital camera 100 notifies the smartphone 200 (200A, 200B) of the image identifier after acquiring the device identifier from the smartphone 200 (200A, 200B) in the embodiment, the notification of the image identifier (S520, S550, S565, S585) may not be performed. Similarly, the authentication (S570, S590) may not be performed. Even if the notification of the image identifier is not performed, since the device identifier and the image identifier are managed as a pair as shown in Fig. 6, the digital camera 100 can transfer the intended image through the touch operation only to the smartphone 200 intended to share the image. However, the notification of the image identifier from the digital camera 100 to the smartphone enables the user of the smartphone to cancel the image sharing through the previous touch operation, if the user wants change the image to be shared. In particular, the user can overwrite the already acquired image identifier with the image identifier acquired through the new touch operation to make an image acquisition request using the newly acquired image identifier.

### Second Embodiment

An image sharing operation performed between the digital camera 100 and the smartphone 200 according to a second embodiment will be described. The configurations of the digital camera 100 and the smartphone 200 according to the second embodiment are the same as the configurations of the digital camera 100 and the smartphone 200 described in the first embodiment, and therefore will not be described in detail (the same applies to the subsequent embodiments). Reference numerals of the constituent elements of the digital camera 100 and the smartphone 200 according to the second embodiment are the same as reference numerals of the digital camera 100 and the smartphone 200 according to the first embodiment (the same applies to the subsequent embodiments).

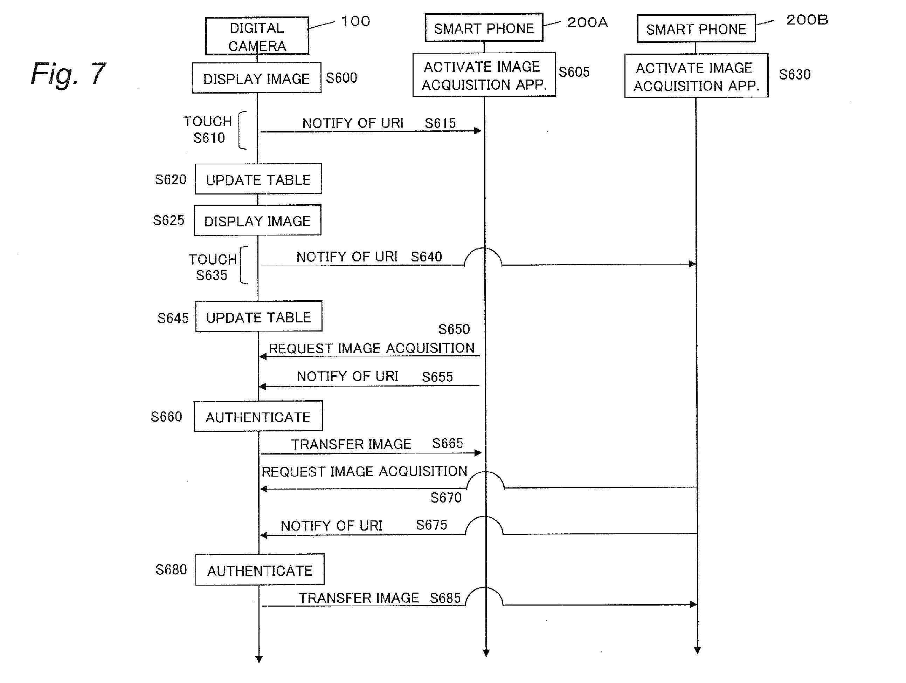

Fig. 7 is a flowchart of an image sharing operation performed between the digital camera 100 and a plurality of (two) smartphones according to the second embodiment. Description will be made of the case that the image date recorded in the memory card 145 of the digital camera 100 is shared with a plurality of smartphones, i.e., the smartphone 200A and the smartphone 200B, with reference to Fig. 7.

In the first embodiment, the device identifier is transmitted from the smartphone 200 to the digital camera 100 and the image identifier is transmitted from the digital camera 100 to the smartphone 200. However, in the second embodiment, instead of communicating the device identifier and the image identifier, a temporary URI (Uniform Resource Identifier) is supplied as an identifier from the digital camera 100 to the smartphone 200. The URI may be made up of a random character string, or the like, or may be configured by using time information, or the like. Therefore, the URI may include information capable of uniquely identifying the time when the touch operation is performed.

The smartphone 200A and the smartphone 200B have the same configuration as the smartphone 200 described in the first embodiment. It is assumed that the establishment of WiFi communication described with reference to Fig. 4 is completed.

The user of the digital camera 100 operates the operation unit 150 to select an image allowed to be shared with the user of the smartphone 200A (an image to be transferred) out of the image data recorded in the memory card 145. Specifically, the user operates the operation unit 150 to display a desired image on the liquid crystal monitor 130 of the digital camera 100. Therefore, the controller 135 of the digital camera 100 displays the image on the liquid crystal monitor 130 in accordance with the operation of the operation unit 150 by the user (S600). As a result of this display, the image to be shared with the user of the smartphone 200A (the image to be transferred) is selected. In particular, the image displayed on the liquid crystal monitor 130 is the image to be shared between the user of the digital camera 100 and the user of the smartphone 200A (the image to be transferred).

On the other hand, the user of the smartphone 200A operates the touch panel 210 to activate an image acquisition application for sharing an image with the digital camera 100. Therefore, the controller 225 of the smartphone 200A activates the image acquisition application in accordance with the operation of the touch panel 210 by the user (S605). As a result, the smartphone 200A shifts to a mode capable of notifying the closely located digital camera 100 of an acquisition request for an image.

The user of the smartphone 200A subsequently performs the touch operation to touch the digital camera 100 with the smartphone 200A while the image is displayed on the liquid crystal monitor 130 of the digital camera 100 (S610). This touch operation causes the controller 135 of the digital camera 100 to notify the controller 225 of the smartphone 200A, through NFC communication, of an URI for identifying this touch operation (S615).

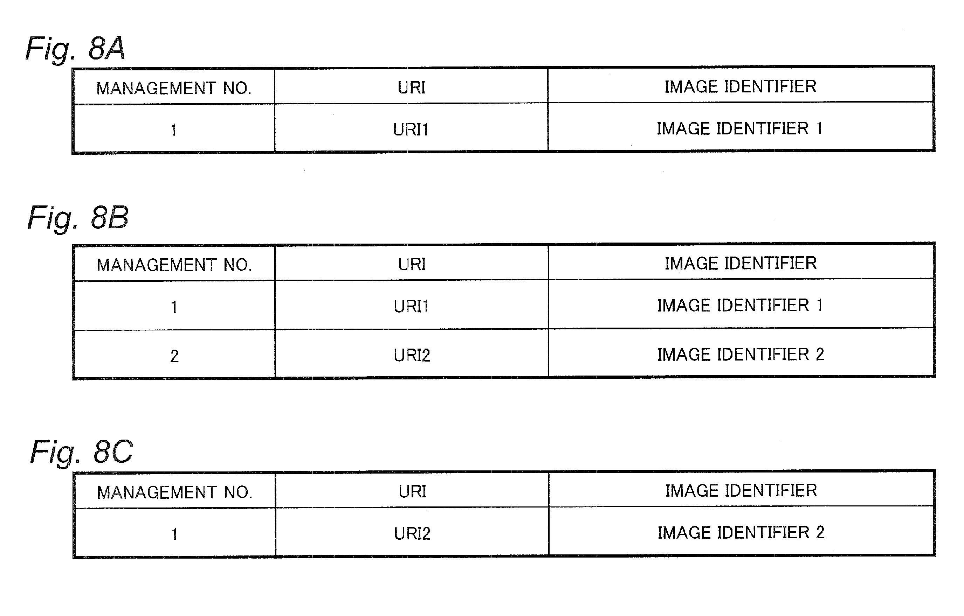

The controller 135 of the digital camera 100 manages the URI supplied to the smartphone 200 and the image identifier of the selected image, correlating them with each other. Figs. 8A-8C are explanatory diagrams of a management table managed by the digital camera 100. As shown in Fig. 8A, the controller 135 of the digital camera 100 manages the URI supplied to the smartphone 200A and the image identifier identifying the image displayed on the liquid crystal monitor 130 of the digital camera 100 at the time of the touch operation of step S610, correlating them with each other. It is assumed that the URI supplied to the smartphone 200A is a "URI 1" while the image identifier identifying the image displayed on the liquid crystal monitor 130 of the digital camera 100 at the time of the touch operation of step S610 is an "image identifier 1." The digital camera 100 creates a management table with the "URI 1" and the "image identifier 1" correlated as shown in Fig. 8(A) and stores the table into the memory in the digital camera 100 (S620). The controller 135 of the digital camera 100 can comprehend which image should be transferred to which device by referring to this management table.

The user of the digital camera 100 then operates the operation unit 150 to select an image allowed to be shared with the user of the smartphone 200B (an image to be transferred) out of the image data recorded in the memory card 145. Therefore, the controller 135 of the digital camera 100 displays the image to be transferred on the liquid crystal monitor 130 in accordance with the operation of the operation unit 150 by the user (S625). As a result, the image to be shared between the digital camera 100 and the smartphone 200B (the image to be transferred) is selected (S625). In particular, the image displayed on the liquid crystal monitor 130 is the image to be shared with the user of the smartphone 200B (the image to be transferred).

On the other hand, the user of the smartphone 200B operates the touch panel 210 to activate the image acquisition application for sharing an image with the digital camera 100. Therefore, the controller 225 of the smartphone 200B activates the image acquisition application in accordance with the operation of the touch panel 210 by the user (S630). As a result, the smartphone 200B shifts to the mode capable of notifying the closely located digital camera 100 of an acquisition request for an image.

The user of the smartphone 200B subsequently performs the touch operation to tough the digital camera 100 with the smartphone 200B while the image is displayed on the liquid crystal monitor 130 of the digital camera 100 (S635). This touch operation causes the controller 135 of the digital camera 100 to notify the controller 225 of the smartphone 200B, through NFC communication, of an URI identifying this touch operation (S640).

The controller 135 of the digital camera 100 manages the URI supplied to the smartphone 200 and the image identifier identifying the image displayed on the liquid crystal monitor 130 of the digital camera 100 at the time of the touch operation of step S635, correlating them with each other. It is assumed that the URI supplied to the smartphone 200B is a "URI 2" while the image identifier identifying the image displayed on the liquid crystal monitor 130 of the digital camera 100 at the time of the touch operation of step S635 is an "image identifier 2." The digital camera 100 creates a management table correlating the "URI 2" and the "image identifier 1" with each other as shown in Fig. 8B and stores the table into the memory in the digital camera 100 (S645). As a result, the correlation between the "URI 1" and the "image identifier 1" and the correlation between the "URI 2" and the "image identifier 2" are managed in this management table. This enables the controller 135 of the digital camera 100 to manage which image should be transferred to which device.

When acquiring the "URI 1" identifying the touch operation of step S610 from the digital camera 100 at step S615, the controller 225 of the smartphone 200A transmits an acquisition request for the image corresponding to the acquired "URI 1" through WiFi communication to the digital camera 100 (S650). The controller 225 of the smartphone 200A notifies the digital camera 100, through WiFi communication, of the "URI 1" identifying the touch operation of step S610 (S655).

Receiving the image acquisition request from the smartphone 200A at step S650, The controller 135 of the digital camera 100 determines whether the "URI 1" acquired from the smartphone 200A at step S655 is present in the management table, thereby authenticating the image acquisition request (S660). As a result of the determination, if the "URI 1" related to the image acquisition request is present in the management table, the controller 135 of the digital camera 100 transfers the data of the image indicated by the "image identifier 1" which is managed in the management table and correlated with the "URI 1", through WiFi communication, to the smartphone 200A (S665). After transferring the image to the smartphone 200A, the controller 135 of the digital camera 100 deletes the pair of the "URI 1" and the "image identifier 1" related to this image acquisition request from the management table, as shown in Fig. 8C. As a result, the digital camera 100 can transfer the image related to the acquisition request only once through one touch operation.

When acquiring the "URI 2" identifying the touch operation of step S635 from the digital camera 100 at step S640, the controller 225 of the smartphone 200B transmits an acquisition request for the image corresponding to the acquired "URI 2" through WiFi communication to the digital camera 100 (S670). The controller 225 of the smartphone 200B then notifies the digital camera 100, through WiFi communication, of the "URI 2" identifying the touch operation of step S635 (S675).

The controller 135 of the digital camera 100 receives the image acquisition request from the smartphone 200B at step S670 and determines whether the "URI 2" acquired at step S675 is present in the management table, thereby authenticating the image acquisition request (S680). As a result of the determination, if the "URI 2" related to the image acquisition request is present in the management table, the controller 135 of the digital camera 100 transfers the image indicated by the "image identifier 2" managed in the management table in correlation with the "URI 2" through WiFi communication to the smartphone 200B (S685). After transferring the image to the smartphone 200B, the controller 135 of the digital camera 100 deletes the pair of the "URI 2" and the "image identifier 2" related to this image acquisition request from the management table. As a result, the digital camera 100 can transfer the image related to the acquisition request only once through one touch operation.

Although the controller 135 of the digital camera 100 deletes the corresponding URI from the management table after transferring the image to the smartphone 200B in the above description, this is not a limitation. For example, a valid time of a URI may be recorded together in the management table such that if an acquisition request is not made by the smartphone 200 for a certain time, the digital camera 100 may delete a corresponding entry to cancel the image transfer to the smartphone 200.

Although each time the touch operation to the smartphone 200 is performed, the controller 135 of the digital camera 100 creates a URI identifying the touch operation of this timing in the above description, this is not a limitation. For example, the digital camera 100 may preliminarily create a URI corresponding to the image data recorded in the memory card 145. However, by creating a URI for each touch operation to the smartphone 200 as described above, the smartphone requesting the image acquisition can be identified only by the URI and the URI can be differentiated each time for the same image data. This enables the enhancement of security of the image sharing between the digital camera 100 and the smartphone 200.

Although the image acquisition request is transmitted from the smartphone 200 to the digital camera 100 (S650) before the transmission of the URI (S655), the smartphone 200 may transmit the image acquisition request and the URI to the digital camera 100 at the same time.

### Third Embodiment

An image sharing operation of the digital camera 100 and the smartphone 200 according to a third embodiment will be described.

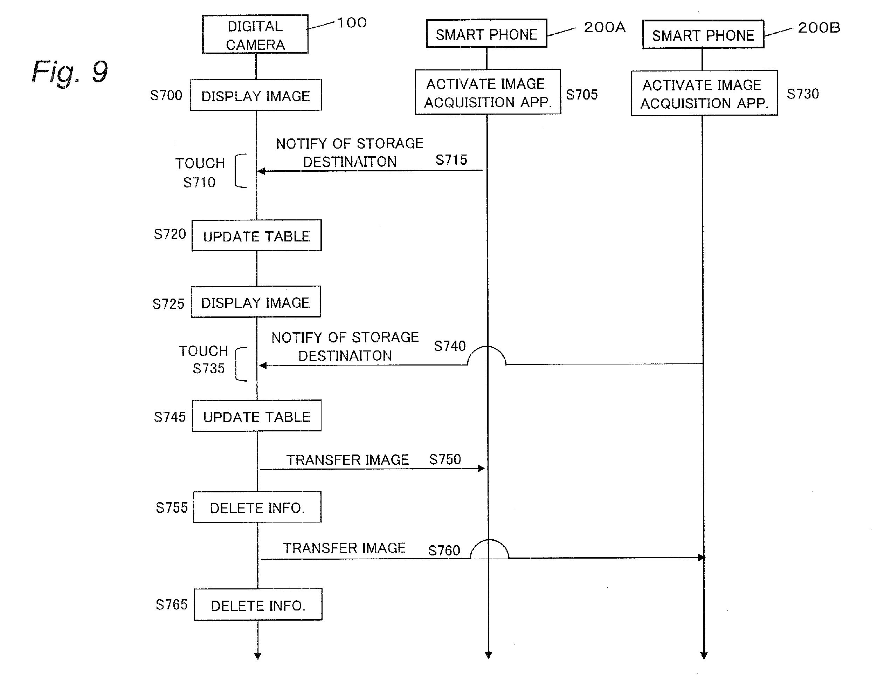

Fig. 9 is a flowchart of an image sharing operation with a plurality of smartphones according to the third embodiment. Description will be made of the case that the image date recorded in the memory card 145 of the digital camera 100 is shared with a plurality of (two) smartphones, i.e., the smartphone 200A and the smartphone 200B, with reference to Fig. 9. In the third embodiment, instead of communicating the device identifier and the image identifier, storage destination information indicative of a storage destination of an image of an acquisition request is supplied from the smartphone 200 to the digital camera 100. The storage destination information may be a file path or a URI (Uniform Resource Identifier) of a recording medium of the smartphone 200. Therefore, the storage destination information may be information capable of uniquely identifying a storage destination of an image of an acquisition request.

The smartphone 200A and the smartphone 200B have the same configuration as the smartphone 200 described in the above embodiments. It is assumed that the establishment of WiFi communication described with reference to Fig. 4 is completed.

The user of the digital camera 100 operates the operation unit 150 to select an image allowed to be shared with the user of the smartphone 200A (an image to be transferred) out of the image data recorded in the memory card 145. Therefore, the controller 135 of the digital camera 100 displays the image on the liquid crystal monitor 130 in accordance with the operation of the operation unit 150 by the user (S700). As a result, the image to be shared with the user of the smartphone 200A (the image to be transferred) is selected. In particular, the image displayed on the liquid crystal monitor 130 is the image to be shared between the digital camera 100 and the smartphone 200A (the image to be transferred).

On the other hand, the user of the smartphone 200A operates the touch panel 210 to activate an image acquisition application for sharing an image with the digital camera 100. Therefore, the controller 225 of the smartphone 200A activates the image acquisition application in accordance with the operation of the touch panel by the user (S705). As a result, the smartphone 200A shifts to a mode capable of notifying the closely located digital camera 100 of an acquisition request for an image.

The user of the smartphone 200A subsequently performs the touch operation to touch the digital camera 100 with the smartphone 200A while the image is displayed on the liquid crystal monitor 130 of the digital camera 100 (S710). This touch operation causes the controller 225 of the smartphone 200A to notify the digital camera 100, through NFC communication, of storage destination information indicative of a location where the image displayed at the time of the touch operation is stored (or recorded) (S715).

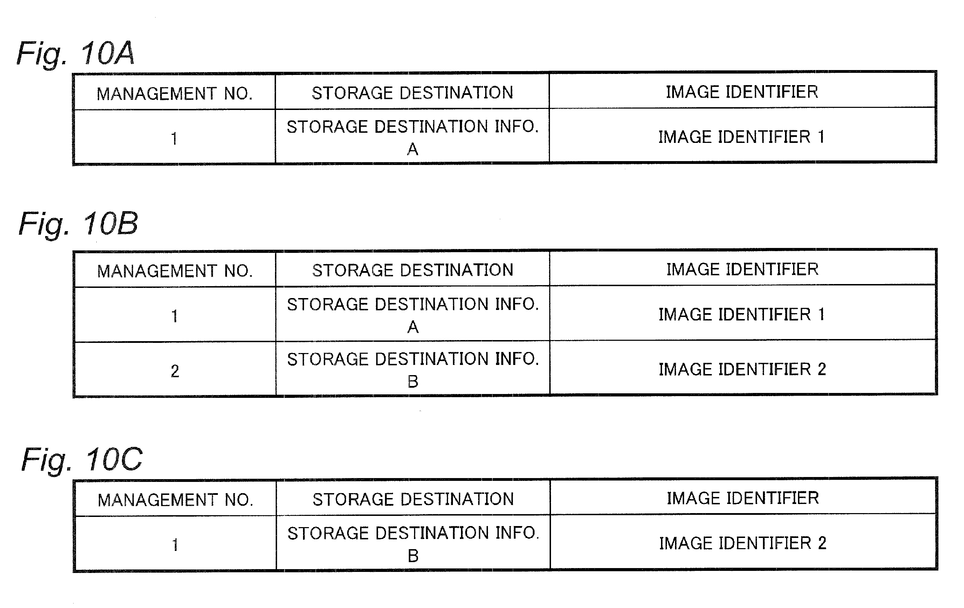

The controller 135 of the digital camera 100 manages the storage destination information supplied from the smartphone 200 and the image identifier identifying the image displayed on the liquid crystal monitor 130 of the digital camera 100 at the time of the touch operation, correlating them with each other. Figs. 10A-10C are explanatory diagrams of a management table managed by the digital camera 100 and correlating the device identifier with the image identifier. As shown in Fig. 10A, the controller 135 of the digital camera 100 manages the storage destination information supplied from the smartphone 200A and the image identifier identifying the image displayed on the liquid crystal monitor 130 of the digital camera 100 at the time of the touch operation of step S710, correlating them with each other. It is assumed that the storage destination information supplied from the smartphone 200A is "storage destination information A" while the image identifier identifying the image displayed on the liquid crystal monitor 130 of the digital camera 100 at the time of the touch operation of step S710 is an "image identifier 1." The digital camera 100 creates a management table with the "storage destination information A" and the "image identifier 1" correlated with each other as shown in Fig. 10A and stores the table into the memory in the digital camera 100 (S720). As a result, the controller 135 of the digital camera 100 can comprehend which image should be transferred to a storage destination of a recording medium of which device.

The user of the digital camera 100 then operates the operation unit 150 to select an image allowed to be shared with the user of the smartphone 200B (an image to be transferred) out of the image data recorded in the memory card 145. Therefore, the controller 135 of the digital camera 100 displays the image to be transferred on the liquid crystal monitor 130 in accordance with the operation of the operation unit 150 by the user (S725). As a result, the image to be shared between the digital camera 100 and the smartphone 200B (the image to be transferred) is selected. In particular, the image displayed on the liquid crystal monitor 130 is the image to be shared with the user of the smartphone 200B (the image to be transferred).

On the other hand, the image acquisition application for sharing an image with the digital camera 100 is activated in the smartphone 200B in accordance with the operation of the touch panel 210 by the user (S730). As a result, the smartphone 200B shifts to the mode capable of notifying the closely located digital camera 100 of an acquisition request for an image (the storage destination information).

The user of the smartphone 200B subsequently performs the touch operation to touch the digital camera 100 with the smartphone 200B while the image is displayed on the liquid crystal monitor 130 of the digital camera 100 (S735). This causes the controller 225 of the smartphone 200B to notify the controller 135 of the digital camera 100, through NFC communication, of the storage destination information indicative of a location where the image displayed at the time of this touch operation is stored (S740).

The controller 135 of the digital camera 100 manages the storage destination information supplied from the smartphone 200 and the image identifier identifying the image displayed on the liquid crystal monitor 130 of the digital camera 100 at the time of the touch operation of step S735 in a correlated manner as shown in Fig. 10B. It is assumed that the storage destination information supplied from the smartphone 200B is "storage destination information B" while the image identifier identifying the image displayed on the liquid crystal monitor 130 of the digital camera 100 at the time of the touch operation of step S735 is an "image identifier 2." The digital camera 100 creates a management table with the "storage destination information B" and the "image identifier 2" correlated as shown in Fig. 10B and stores the table into the memory in the digital camera 100 (S745). As a result, the correlation between the "storage destination information A" and the "image identifier 1" and the correlation between the "storage destination information B" and the "image identifier 2" are managed in this management table. Such correlation information enables the controller 135 of the digital camera 100 to manage which image should be transferred to a storage destination of a recording medium of which device.

When receiving the notification of the "storage destination information A" from the smartphone 200A at step S715, the controller 135 of the digital camera 100 transfers the image selected on the digital camera 100 at the time of the touch operation through WiFi communication to the smartphone 200A (S750). In particular, when receiving the notification of the "storage destination information A" from the smartphone 200A, the controller 135 temporarily manages the "storage destination information A" and the "image identifier 1" indicative of the image selected at the time of the touch operation, correlating them with each other in the management table. The controller 135 refers to this management table and transfers the image indicated by the "image identifier 1" through WiFi communication to the smartphone 200A (S750). After transferring the image to the smartphone 200A, the controller 135 of the digital camera 100 deletes the pair of the "storage destination information A" and the "image identifier 1" from the management table as shown in Fig. 10C. In this way, the digital camera 100 can transfer the image related to the acquisition request (notification of the storage destination information) only once through one touch operation.

When receiving the notification of the "storage destination information B" from the smartphone 200B at step S740, the controller 135 of the digital camera 100 transfers the image indicated by the "image identifier 2" temporarily managed in the management table in correlation with this "storage destination information B" through WiFi communication to the smartphone 200B (S760). After transferring the image to the smartphone 200B, the controller 135 of the digital camera 100 deletes the pair of the "storage destination information B" and the "image identifier 2" from the management table (S765). As a result, the digital camera 100 can transfer the image related to the acquisition request only once through one touch operation.

The smartphone in the above description may set a valid period for which he image can be received, to the storage destination information. In this case, the reception of image may be rejected if the set valid period has expired.

### Fourth Embodiment

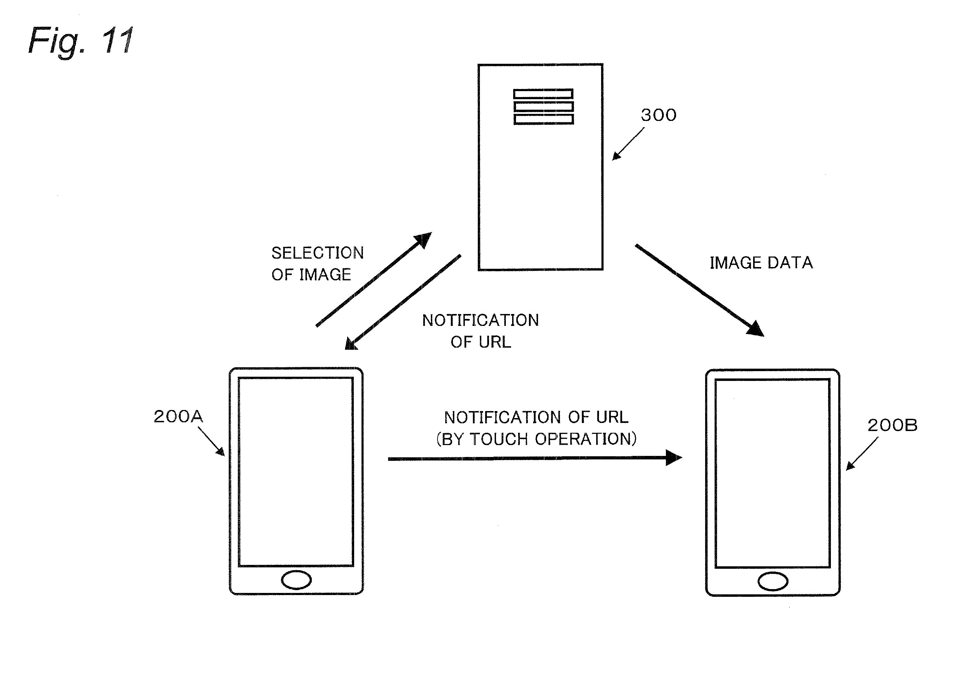

An image sharing operation of the smartphone 200A and the smartphone 200B according to a fourth embodiment will be described. In the above embodiments, the touch operation serving as a trigger for the image sharing is performed between the digital camera 100 and the smartphone 200. On the other hand, in the fourth embodiment, the touch operation is performed between the smartphone 200A and the smartphone 200B, as shown in Fig. 11 for sharing an image. In this case, the image is shared through a cloud server 300 instead of sharing the image directly through WiFi communication.

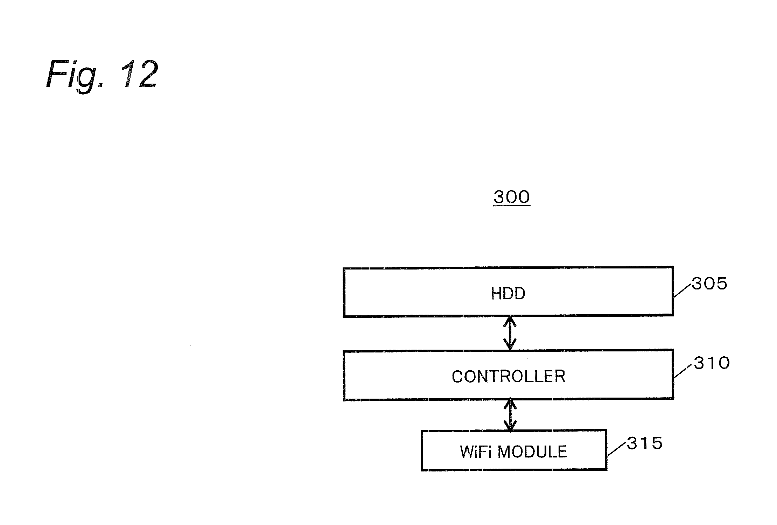

The cloud server 300 is a host computer connected to a network (e.g., the Internet) and provides services corresponding to requests from client devices such as the smartphone 200A and the smartphone 200B. Fig. 12 is a diagram of a configuration of the cloud server 300. The configuration of the cloud server 300 will be described with reference to Fig. 12.

The cloud server 300 includes a HDD (Hard Disk Drive) 305, a controller 310, a WiFi module 315, etc. The HDD 305 is a large capacity recording medium. The HDD 305 stores various data such as image data. The HDD 305 may be other recording medium such as an SSD (Solid State Drive) or an optical disk. The controller 310 generally controls the cloud server 300. The controller 310 processes various requests from a client computer received through a WiFi module 315.

The WiFi module 315 is a communication module performing communication conforming to the communication standard IEEE 802.11. The cloud server 300 can communicate through the WiFi module 315 with a client computer equipped with a WiFi module. A communicating means of the cloud server 300 is not limited to a wireless communicating means such as WiFi module and may be a wired communicating means. However, in the case of a wired communicating means, the cloud server 300 requires a relay apparatus such as a router switching a wireless communicating means to a wired communicating means when communicating with the smartphone 200A or the smartphone 200B each equipped with the WiFi module.

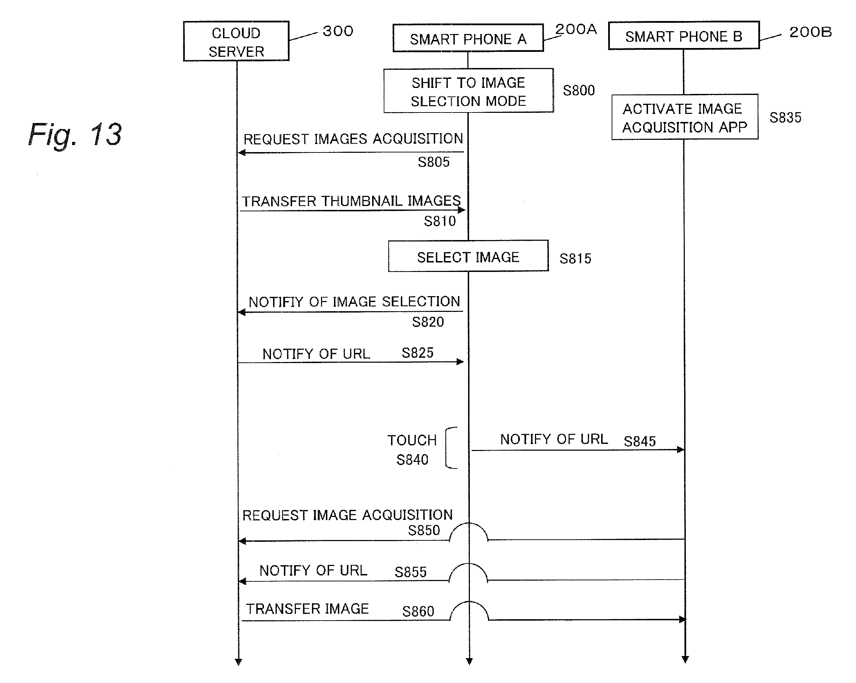

Fig. 13 is a flowchart of an image sharing operation between smartphones according to the fourth embodiment. The user of the smartphone 200A operates a touch panel 210A or the like to cause a predetermined application program to be executed for image transfer. Therefore, the controller 225 of the smartphone 200A activates the predetermined application program for image transfer in accordance with the user operation. As a result, the smartphone 200A shifts to an image selection mode (S800). When shifting to the image selection mode, the controller 225 of the smartphone 200A transmits an image acquisition request through a WiFi module 235A to the cloud server 300 (S805). This image acquisition request is a request for acquisition of thumbnail images of images which the smartphone 200A or the user of the smartphone 200A is granted the authority to access and which are stored in the HDD 305 of the cloud server 300.

When receiving the image acquisition request from the smartphone 200A, the controller 310 of the cloud server 300 transmits the "thumbnail images " to the smartphone 200A (S810). The controller 310 of the smartphone 200A displays the received thumbnail images on the liquid crystal monitor 215. This enables the user of the smartphone 200A to confirm, on the liquid crystal monitor 215 of the smartphone 200A, the contents of the images which the smartphone 200A or the user of the smartphone 200A is granted the authority to access and which are stored in the HDD 305 of the cloud server 300.

The user of the smartphone 200A operates the touch panel 210A or the like to select an image allowed to be shared with the user of the smartphone 200B (an image to be transferred) out of the "thumbnail images" acquired from the cloud server 300. Specifically, the image selected through the operation of the touch panel 210A, or the like by the user is displayed on a liquid crystal monitor 215A of the smartphone 200A. As a result of this display, the image to be shared with the user of the smartphone 200B (the image to be transferred) is selected (S815). In particular, the image displayed on the liquid crystal monitor 215A is the image to be shared with the user of the smartphone 200B (the image to be transferred).

When the image to be transferred is selected, the controller 225 of the smartphone 200A transmits information indicative of selection of the image to be transferred through the WiFi module 235A to the cloud server 300 (S820). This information includes information identifying the selected image. When receiving the notification of step S820 from the smartphone 200A, the controller 310 of the cloud server 300 notifies the smartphone 200A of a URL indicative of information on the recording location of the selected image on the HDD 305 (S825). The smartphone 200A receives the notification of the URL and temporarily stores the URL in the memory.

On the other hand, the user of the smartphone 200B operates a touch panel 210B to activate an image acquisition application for sharing an image with the smartphone 200A. Therefore, the controller of the smartphone 200B activates the image acquisition application in accordance with the user operation (S835). As a result, the smartphone 200B shifts to a mode capable of sharing an image with the closely located smartphone 200A.

The user of the smartphone 200B subsequently performs the touch operation to touch the smartphone 200A with the smartphone 200B while the selected image is displayed on the liquid crystal monitor 215A of the smartphone 200A (S840). This touch operation causes a controller 225A of the smartphone 200A to notify the smartphone 200B, through NFC communication, of the URL (acquired at step S825) indicative of the recording location on the HDD 305 of the cloud server 300 with respect to the image displayed at the time of this touch operation (S845).

When receiving the notification of the URL from the smartphone 200A at step S845, the controller 225 of the smartphone 200B transmits to the cloud server 300 an acquisition request for the image indicated by the URL of the notification (S850). The controller 225 of the smartphone 200B notifies the cloud server 300 of the URL supplied from the smartphone 200A (S855).

The cloud server 300 receives the image acquisition request (S850) and the URL (S855) and transfers the image recorded in the recording location indicated by the URL to the smartphone 200A (S860). In this way, the smartphone 200B can acquire the specified image through the touch operation with the smartphone 200A.

### Conclusion

As described above, the digital camera 100 (an example of a communication apparatus) of the present disclosure includes a communicating unit including the WiFi module 155 and the NFC tag 160, and the controller 135 controlling communication through the communicating unit. When the smartphone 200 comes within a predetermined distance (the communicable distance of the NFC tag 160) from the communicating unit, the controller 135 receives the device identification information (device identifier) for identifying the smartphone 200 through the NFC tag 160, stores the correlation information (management table) correlating the received device identification information with the image identification information (image identifier) identifying the image data to be transferred, and transfers, to the smartphone 200, the image data to be transferred based on the stored correlation information. With this configuration, a touch (NFC communication) between the digital camera 100 and the smartphone 200 cause the image data to be transferred from the digital camera 100 to the smartphone 200. As described above, the "touch" that is a means enabling simple and reliable confirmation of the image transfer for the other party is used as a trigger to transfer an image, so that the image data can be shared between devices in a simple method for users while ensuring the security.

The device identification information may be any information capable of uniquely identifying the device of the other party to which the image to be transferred is transferred, and may be, for example, the "device identifier" in the first embodiment, the "URI" in the second embodiment, and the "storage destination information" in the third embodiment.

### Other Embodiments

The present invention is not limited to the embodiments and various embodiments are conceivable. Other embodiments of the present invention will hereinafter be described together.

Although the image displayed on the liquid crystal monitor 130 is defined as the image to be transferred in the embodiments, the image to be transferred is not limited to this. An image allowed to be shared with the user of the smartphone 200 (an image to be transferred) may be selected and registered in advance in the digital camera 100 out of the image data recorded in the memory card 145, in accordance with an operation of the operation unit 150 by the user. In this case, the image registered in advance is shared (transferred) through the touch operation between the digital camera 100 and the smartphone 200.

An image sharing request received by the digital camera 100 is managed in the management table in the embodiments. For example, as shown in Fig. 6, the image sharing request indicative of which image should be transferred to which device, such as a pair of the "device identifier A" and the "image identifier 1" is managed in the management table. This management table is stored on the memory of the digital camera 100. Therefore, if free memory space reaches an upper limit or substantial upper limit of the memory capacity, the management table may not be updated. Thus, when the free memory space reaches the upper limit or a predetermined proportion of the upper limit of the memory capacity, the digital camera 100 may notify the smartphone 200 of unavailability of image sharing when the touch operation is performed. The smartphone 200 may display the unavailability of image sharing on the liquid crystal monitor 215 based on the notification from the digital camera 100.

All the processes of the image sharing requests managed in the management table are executed in the case described in the embodiments. On the other hand, if the digital camera 100 is powered off while not all the processes of the image sharing requests managed in the management table are ended and some of the image sharing requests remain, the power-off may not be completed until all the processes of the image sharing requests are finished. Alternatively, when the digital camera 100 is powered off, all the unprocessed image sharing requests may be discarded.

The digital camera 100 notifies the smartphone 200 of the image identifier through the touch operation in the case described in the first embodiment. In this case, the digital camera 100 may notify the smartphone 200 of an image size of the image to be transferred in addition to the notification of the image identifier. The smartphone 200 can check whether the memory capacity thereof is sufficient, based on the image size acquired from the digital camera 100. If determining that the memory capacity is not sufficient, the smartphone 200 can notify the digital camera 100 of cancelation of the image transfer.

Although the image sharing between the one digital camera 100 and the one smartphone 200 is described in the embodiments, the image sharing may be performed between the two digital cameras 100 and the one smartphone 200. For example, after performing the touch operation to the first digital camera 100, the smartphone 200 may perform the touch operation to the second digital camera different from the first digital camera. In this case, after completing the process of the image sharing request with the first digital camera 100, the smartphone 200 may execute the process of the image sharing request with the second digital camera 100. Alternatively, the smartphone 200 may interrupt the process of the image sharing request with the first digital camera 100 to immediately execute the process of the image sharing request with the second digital camera.

Although the image sharing between the digital camera 100 and the smartphone 200 is described as an example in the embodiments, the electronic devices (communication apparatuses) sharing an image are not limited to this combination. Even when the digital cameras share an image with each other or the smartphones 200 share an image with each other, the same technical concept is applicable.

The controller 135 of the digital camera 100 and the controller 225 of the smartphone 200 are made up of a CPU, an MPU, or an FPGA, for example.

As described above, the embodiments have been described as exemplification of the techniques in the present disclosure. For this purpose, the accompanying drawings and detailed description have been provided.

Therefore, the constituent elements described in the accompanying drawings and detailed description may include not only the constituent elements essential for solving the problem but also the constituent elements not essential for solving the problem, for exemplification of the techniques. Thus, these non-essential elements should not immediately be recognized as being essential because these non-essential elements are described in the accompanying drawings and detailed description.

The embodiments are for the purpose of exemplification of the techniques in the present disclosure and therefore can be subjected to various modifications, replacements, additions, and omissions within the scope of claims or the scope equivalent thereto.

### INDUSTRIAL APPLICABILITY

The technical concept of the present disclosure is not limited to the application to digital cameras and smartphones. Therefore, the technical concept of the present disclosure can be implemented in any other devices that are communication apparatus capable of communicating an image.

## Claims

1. A communication apparatus comprising:
a communicating unit; and
a controller configured to control communication through the communicating unit, wherein
when another communication device comes within a predetermined distance from the communicating unit, the controller
receives device identification information for identifying the other device from the other device through the communicating unit,
stores correlation information correlating the received device identification information with image identification information identifying image data to be transferred into a predetermined storage device, and
transfers the image data to be transferred to the other communication device based on the stored correlation information.

2. The communication apparatus according to claim 1, wherein
the controller defines image data selected by a user as the image data to be transferred.

3. The communication apparatus according to claim 2, further comprising a displaying unit, wherein
the controller defines image data selected by a user and displayed on the displaying unit as the image data to be transferred.

4. The communication apparatus according to claim 2, wherein
the controller defines image data selected by a user and registered in advance as the image data to be transferred.

5. The communication apparatus according to any one of claims 1 to 4, wherein when transferring image data to the other communication device, the controller notifies the other communication device of information on a data size of the image data to be transferred through the communicating unit.

6. The communication apparatus according to any one of claims 1 to 5 wherein
the communicating unit includes a first communicating unit and a second communicating unit having a communication distance longer than the first communicating unit,
the device identification information is acquired through the first communicating unit from the other communication device, and
the image to be transferred is transferred to the other communication device through the second communicating unit.

7. A communication apparatus comprising:
a first communicating unit;
a second communicating unit having a communicable distance shorter than the first communicating unit; and
a controller configured to control communication through the first communicating unit and the second communicating unit,
when another communication device comes within the communicable distance to the second communicating unit, the controller
receives device identification information identifying the other communication device from the other communication device through the second communicating unit,
stores correlation information correlating the received device identification information with image identification information identifying image data to be transferred into a predetermined storage device, and
transmits the image data to be transferred through the first communicating unit to the other communication device based on the stored correlation information.

8. A method of transferring image data from a first device to a second device, comprising:
transmitting device identification information identifying the second device from the second device to the first device, when a distance between the first device and the second device becomes within a predetermined communication distance;
storing, by the first device, correlation information correlating the device identification information received from the second device with image identification information identifying image data to be transferred; and
transmitting, by the first device, the image data to be transferred to the second device based on the stored correlation information.
